# EUROPÄISCHE PATENTSCHRIFT

(11) **EP 2 910 290 B1**
(45) Veröffentlichungstag und Bekanntmachung des Hinweises auf die Patenterteilung: **05.02.2020**
(21) Anmeldenummer: 14196222.5
(22) Anmeldetag: 04.12.2014
(51) Int. Cl.: B01D 36/00, B01D 29/96

(54) **Flüssigkeitsfilter**
Liquid filter
Filtre à liquide

(30) Priorität: 23.01.2014 DE 102014000716
(43) Veröffentlichungstag der Anmeldung: 26.08.2015
(73) Patentinhaber: MANN + HUMMEL GMBH, 71636 Ludwigsburg (DE)
(72) Erfinder: Ammersdörfer, Micha, 71642 Ludwigsburg (DE)

(56) Entgegenhaltungen:
- WO-A1-01/72396
- CA-A- 678 486
- US-A- 4 036 616
- US-A1- 2010 101 993

## Beschreibung

### Technisches Gebiet

Die Erfindung bezieht sich auf einen Flüssigkeitsfilter, insbesondere einen Kraftstoffoder Ölfilter, nach dem Oberbegriff des Anspruches 1.

### Stand der Technik

In der EP 0 811 411 B1 wird ein Flüssigkeitsfilter mit einem hohlzylindrischen, radial zu durchströmenden Filterelement beschrieben, dessen Stirnseiten von Endscheiben eingefasst sind. Die Ableitung des gereinigten Fluids erfolgt axial über den innen liegenden Hohlraum, der an ein Ablaufrohr angeschlossen ist. In die unten liegende Endscheibe ist ein Dichtring eingesetzt, der zwischen dem Filterelement und dem Abströmrohr angeordnet ist.

Aus der US 2010/101993 A1 ist ein Filterelement in einer Filtereinrichtung bekannt, das auf einer Endscheibe eine Dichtungsstruktur aufweist. Im Allgemeinen umfasst die Dichtungsstruktur einen ringförmigen Flansch an der Endscheibe, die gegen eine Innenfläche eines Gehäuses direkt abdichten kann, wenn das Filterelement für die Verwendung zusammengebaut ist.

Die US 4 036 616 A zeigt einen Bakterienfilter mit einem zylindrisch gefalteten Filterelement. Das Filtermedium des Filterelements ist an einem Ende an ein Basisbauteil des Filtergehäuses und am gegenüberliegenden Ende mit einer Endkappe verklebt.

Der CA 678 486 A ist eine Filteranordnung zu entnehmen, bei der ein zylindrisches Filterelement in einem nichtöffenbaren Gehäuse aufgenommen ist. Mittels einer Federkraft wird das Filterelement kraftschlüssig gegen die Gehäuseinnenwand gehalten.

In der WO 2004/082804 A1 wird ein Filtersystem für Dieselkraftstoff beschrieben, das ein ringförmiges Filterelement in einem Filtergehäuse aufweist, das an einem Steigrohr gehalten ist. Axial versetzt zu dem Filterelement ist an dem Steigrohr ein Coalescer-Element angeordnet, über das die im Kraftstoff dispersiv vorliegenden Wassertröpfchen zu größeren Tröpfchen angereichert werden, um die Wasserabscheidung zu erleichtern. Die Wassertröpfchen im Kraftstoff werden an der radial außen liegenden Seite des Coalescer-Elements abgeschieden und strömen an der Außenseite des Filterelements axial nach unten zu einem im Boden des Gehäuses befindlichen Wassersammelraum, aus dem das Wasser über eine Ablassschraube abgelassen werden kann.

### Offenbarung der Erfindung

Der Erfindung liegt die Aufgabe zugrunde, mit einfachen konstruktiven Maßnahmen einen Flüssigkeitsfilter in der Weise auszuführen, dass ein bodenseitiger Wassersammelraum strömungsdicht von einem darüberliegenden Filterelement separiert ist.

Diese Aufgabe wird erfindungsgemäß mit den Merkmalen des Anspruches 1 gelöst. Die Unteransprüche geben zweckmäßige Weiterbildungen an.

Der erfindungsgemäße Flüssigkeitsfilter kann beispielsweise zur Filtration von Kraftstoff oder Öl eingesetzt werden und weist in einem Gehäusebauteil ein hohlzylindrisches Filterelement auf, das radial von dem zu reinigenden Fluid durchströmt wird. Die Durchströmungsrichtung erfolgt vorzugsweise radial von außen nach innen, so dass die radial außen liegende Mantelfläche die Rohseite und der im Filterelement befindliche zylindrische Hohlraum die Reinseite bilden. Unterhalb des Filterelementes befindet sich im Boden des Gehäusebauteils ein Wassersammelraum, in welchem Wassertröpfchen, die aus dem Fluid abgeschieden werden, aufgefangen werden.

Das hohlzylindrische Filterelement weist an seinen beiden gegenüberliegenden, axialen Stirnseiten jeweils eine Endscheibe auf, welche das Filterelement axial strömungsdicht verschließen. In die Endscheiben sind zentrische Öffnungen eingebracht, über die Fluid aus dem Hohlraum abgeleitet werden kann. Die unten liegende, dem Boden zugewandte Endscheibe des Filterelementes liegt unmittelbar an der Innenseite des Gehäusebauteils an und schließt den unter der Endscheibe angeordneten, bodenseitigen Wassersammelraum strömungsdicht ab, vorzugsweise gegenüber der Rohseite des Filterelementes. Diese Ausführung hat den Vorteil, dass die Abdichtung und Versiegelung in konstruktiv einfacher Weise bewerkstelligt werden kann; ein Dichtungselement zwischen der Endscheibe des Filterelementes und der Innenseite des Gehäusebauteils ist nicht erforderlich. Vielmehr liegt die Endscheibe direkt und strömungsdicht an der Innenseite des Gehäusebauteils an.

Erfindungsgemäß liegt die radial außen liegende Kante der Endscheibe strömungsdicht an dem Gehäusebauteil an. Bei einer Durchströmung des hohlzylindrischen Filterelementes radial von außen nach innen bildet die Außenseite die Rohseite, die über die strömungsdichte Verbindung zwischen der unten liegenden, radial äußeren Kante der Endscheibe und der Innenrand des Gehäusebauteils strömungsdicht gegenüber dem darunterliegenden Wassersammelraum abgeschlossen ist. Ein Übertritt von Rohfluid zum Wassersammelraum ist dadurch ausgeschlossen.

Die Abscheidung des Wassers erfolgt bei dem Flüssigkeitsfilter bevorzugt auf der Reinseite des Filterelementes. Bei der Durchströmung radial von außen nach innen befindet sich vorteilhafterweise ein Coalescer-Element an der Reinseite des Filterelementes und somit im innen liegenden Hohlraum. Das Coalescer-Element sorgt für eine Anreicherung dispersiv vorliegender Wassertröpfchen zu größeren Tröpfchen, die anschließend über den innen liegenden Hohlraum axial nach unten in den Wassersammelraum abströmen können. Die Ableitung des gereinigten Fluids erfolgt dagegen vorteilhafterweise aus dem Hohlraum axial nach oben.

Zusätzlich oder alternativ zu einem Coalescer-Element kann an der Reinseite des Filterelementes auch ein Wasserabscheidesieb angeordnet sein. Für den Fall, dass sowohl ein Coalescer-Element als auch ein Wasserabscheidesieb vorgesehen sind, befindet sich das Coalescer-Element zwischen der Reinseite des Filterelementes und dem Wasserabscheidesieb, welches vorzugsweise im innen liegenden Hohlraum angeordnet ist.

Die Verbindung zwischen der Endscheibe des Filterelementes und der Innenseite des Gehäusebauteils erfolgt erfindungsgemäß in einer unlösbaren Weise. Zu diesem Zweck ist die Endscheibe mit dem Gehäusebauteil verschweißt, beispielsweise im Wege eines rotatorischen Vibrationsschweißens. Aufgrund der unlösbaren Verbindung bilden das Filterelement und das Gehäusebauteil eine zusammenhängende Baueinheit, die insgesamt mit einem aufnehmenden Gehäuse zu verbinden ist. Das Gehäusebauteil mit dem Filterelement bildet einen Deckel mit einem Außengewinde, das in ein korrespondierendes Gewinde an einem aufnehmenden Gehäuse einschraubbar ist. Für Wartungszwecke muss lediglich die Baueinheit, umfassend das Gehäusebauteil und das Filterelement, vom aufnehmenden Gehäuse abgeschraubt und durch eine andere Baueinheit ersetzt werden.

Die Endscheibe des Filterelementes und die Innenseite am Gehäusebauteil können über eine Nut-Feder- bzw. Nut-Vorsprung-Verbindung miteinander verbunden sein. Es handelt sich um einen formschlüssigen Eingriff des umlaufenden Vorsprunges in die umlaufende Nut, wobei zugleich eine Art Labyrinthdichtung zwischen dem Wassersammelraum und der darüberliegenden Rohseite am Filterelement gegeben ist. Der Vorsprung liegt vorteilhafterweise flächig in der Nut, wobei Vorsprung und Nut beispielsweise einen trapezförmigen Querschnitt aufweisen mit winklig zueinander stehenden Seitenwänden und einer geradflächigen Stirnseite. Durch die flächige Anlage des zwischen den Innenwänden der Nut und den Außenwänden des Vorsprungs wird die Dichtigkeit unterstützt.

Alternativ zu geraden Flächen kommen auch gekrümmte Flächen in Betracht, beispielsweise konvex gekrümmte Seitenflächen an dem Vorsprung und entsprechend geformte Innenwände an der Nut.

Die umlaufende Ausführung von Nut und Vorsprung hat zudem den Vorteil, dass in einfacher Weise eine Schweißverbindung durch rotatorisches Vibrationsschweißen hergestellt werden kann. Sowohl die Endscheibe als auch das Gehäusebauteil bestehen jeweils aus Materalien, die eine strömungsdichte Verbindung unterstützen und insbesondere für die Herstellung einer Schweißverbindung geeignet sind. Erfindungsgemäß besteht das Gehäusebauteil aus einem Kunststoffmaterial und auch die Endscheibe besteht aus einem einen Schweißvorgang begünstigenden Kunststoffmaterial.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch ein hohlzylindrisches Filterelement für einen Flüssigkeitsfilter,
- Fig. 2: ein Gehäusebauteil zur Aufnahme des Filterelementes nach Fig. 1, mit einem bodenseitigen Wassersammelraum,
- Fig. 3: das Filterelement und das Gehäusebauteil im zusammengesetzten Zustand,
- Fig. 4: eine Detaildarstellung aus dem Verbindungsbereich zwischen einer unteren Endscheibe am Filterelement und der Innenseite des aufnehmenden Gehäusebauteils.

In den Figuren sind gleiche Bauteile mit gleichen Bezugszeichen versehen.

### Ausführungsform(en) der Erfindung

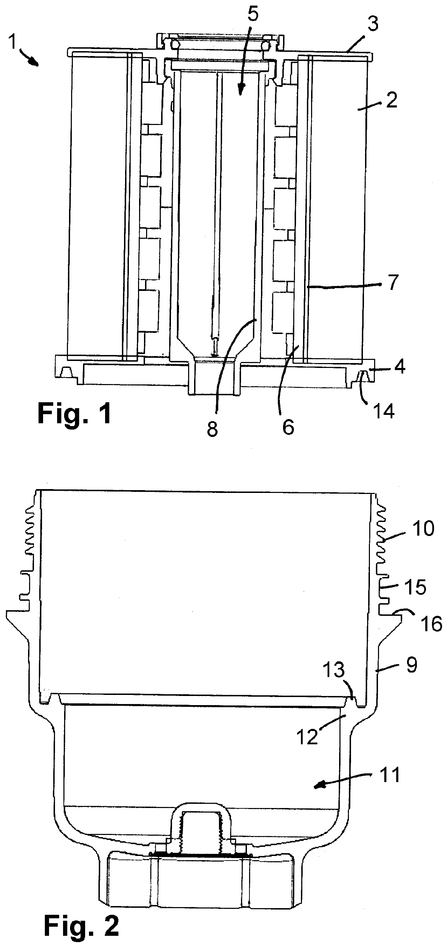

Die folgenden Figuren beziehen sich auf einen Flüssigkeitsfilter wie zum Beispiel einen Diesel-Kraftstofffilter. In Fig. 1 ist das hohlzylindrische Filterelement 1 dargestellt, dessen Filtermittel bzw. -mediumkörper 2 an beiden gegenüberliegenden axialen Stirnseiten von je einer Endscheibe 3, 4 strömungsdicht verschlossen ist. In jede Endscheibe 3, 4 ist eine zentrische Ausnehmung zur Abströmung gereinigten Fluids nach oben bzw. abgeschiedener Wassertröpfchen nach unten aus einem innen liegenden, zylindrischen Hohlraum 5 im Filterelement eingebracht. Das Filterelement 1 wird radial von außen nach innen von dem zu reinigenden Fluid durchströmt, so dass die außen liegende Mantelfläche die Rohseite und der innen liegende, zylindrische Hohlraum 5 die Reinseite bilden.

Der Hohlraum 5 ist von einem Stütz- bzw. Mittelrohr 6 ausgekleidet, das dem Filtermediumkörper 2 zusätzliche Stabilität verleiht. Zwischen der Abströmseite des Filtermediumkörpers 2 und dem Mittelrohr 6 befindet sich ein umlaufendes Coalescer-Element 7, mit dem in dem Fluid dispersiv vorliegende kleine Wassertröpfchen zu größeren Wassertropfen zusammengeführt werden.

In den Hohlraum 5 ist außerdem innerhalb des Mittelrohrs 6 ein Wasserabscheidesieb 8 integriert. An der Wandung des Wasserabscheidesiebs 8 können die Wassertröpfchen nach unten strömen und über die Öffnung in der unteren Endscheibe 4 axial nach unten in Richtung eines Wassersammelraums abfließen. Das gereinigte Fluid wird dagegen aus dem Hohlraum 5 über die Öffnung in der oberen Endscheibe 3 axial abgeleitet.

In Fig. 2 ist ein Gehäusebauteil 9 dargestellt, das das Filterelement 1 aus Fig. 1 aufnimmt. Das Gehäusebauteil 9 bildet einen Deckel mit einem Außengewinde 10 und kann in ein aufnehmendes Gehäuse von unten eingeschraubt werden.

Der bodennahe Bereich im Inneren des Gehäusebauteils 9 bildet einen Wassersammelraum 11 zur Aufnahme von Wasser, das im Filterelement 1 abgeschieden wird und nach unten abtropft. Das Gehäusebauteil 9 ist annähernd topfförmig ausgebildet, wobei der bodennahe Bereich mit dem Wassersammelraum 11 einen kleineren Durchmesser aufweist als der obere, der offenen Stirnseite benachbarte Bereich, in den das Filterelement 1 eingesetzt wird. Im Übergang zwischen den Bereichen mit unterschiedlichem Durchmesser ist eine umlaufende, radial nach innen einragende Schulter 12 gebildet, an der benachbart zur Gehäusewand ein umlaufender Verbindungsvorsprung 13 angeordnet ist, der bezogen auf die Längsachse von Filterelement 1 und Gehäusebauteil 9 axial nach oben gerichtet ist. Dem Verbindungsvorsprung 13 ist an der unteren Endscheibe 4 des Filterelementes 1 eine ebenfalls umlaufende Verbindungsnut 14 zugeordnet, die axial nach unten offen ausgebildet ist und die gleiche Querschnittsform wie der Verbindungsvorsprung 13 an der Innenseite des Gehäusebauteils 9 aufweist.

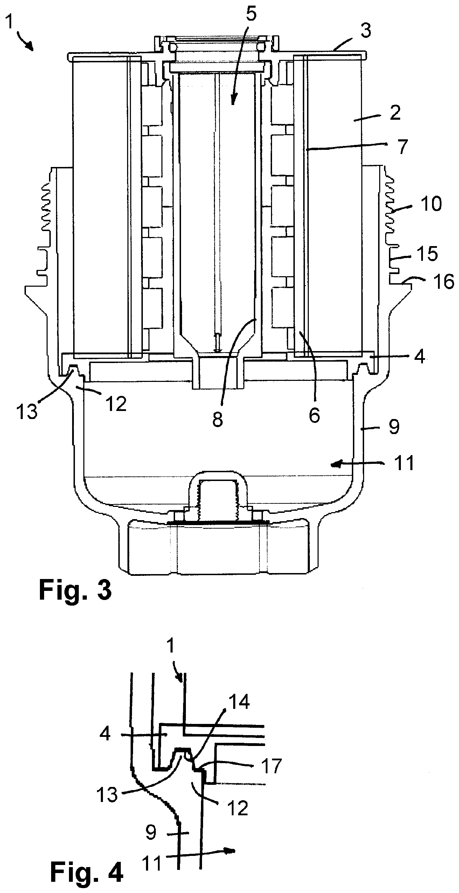

Das Filterelement 1 kann mit der Verbindungsnut 14 an der Unterseite der unteren Endscheibe 4 formschlüssig auf den Verbindungsvorsprung 13 an der Innenseite des Gehäusebauteils 9 aufgesetzt werden (Fig. 3, 4). Dies ermöglicht die Herstellung einer festen, unlösbaren Verbindung zwischen dem Filterelement 1 und dem Gehäusebauteil 9, indem der Verbindungsvorsprung 13 und die Verbindungsnut 14 beispielsweise durch rotatorisches Reib- bzw. Vibrationsschweißen miteinander verbunden werden. Alternativ zu einer Schweißverbindung zwischen dem Verbindungsvorsprung 13 und der Verbindungsnut 14 kommen auch sonstige, feste Verbindungsarten in Betracht, beispielsweise Verkleben.

Die Verbindung ist strömungsdicht, so dass der Wassersammelraum 11 im bodennahen Bereich des Gehäusebauteils 9 von der Rohseite am Außenumfang des Filterelementes 1 separiert ist. Der Wassersammelraum 9 kommuniziert nur mit dem Hohlraum 5 im Filterelement 1, also mit der Reinseite, aus der vom Wasserabscheidesieb 8 Wassertröpfchen nach unten in Richtung Wassersammelraum 11 abtropfen können.

Wie Fig. 2 und Fig. 3 zu entnehmen, läuft an der Außenseite des Gehäusebauteils 9 unmittelbar unterhalb des Außengewindes 10 eine Aufnahmenut 15 um, die oberhalb eines umlaufenden, radial nach außen gerichteten Absatzes 16 liegt und zur Aufnahme eines Dichtringes dient. Beim Einschrauben des Gehäusebauteils 9 mit dem Außengewinde 10 in ein aufnehmendes Gehäuse sorgt der Dichtring in der Aufnahmenut 15 für eine strömungsdichte Verbindung, der Absatz 16 begrenzt die Einschraubtiefe.

Wie der vergrößerten Darstellung gemäß Fig. 4 zu entnehmen, weisen der Verbindungsvorsprung 13 an der Innenseite des Gehäusebauteils 9 und die Verbindungsnut 14 an der Unterseite der Endscheibe 4 jeweils einen trapezförmigen, gleich großen Querschnitt auf. Mit dem Eingriff des Verbindungsvorsprunges 13 in die Verbindungsnut 14 liegen die Seitenwände und der Boden bzw. die Stirnseite von Vorsprung und Nut flächig aneinander, was eine strömungsdichte Verbindung unterstützt.

Des Weiteren ist gegenüber Vorsprung und Nut radial nach innen versetzt eine umlaufende Schulter 17 sowohl an der Innenseite des Gehäusebauteils 9 als auch an der Unterseite des Endscheibe 4 gebildet, an der die korrespondierenden Seiten flächig aneinanderliegen. Der Absatz 17 verlängert die Verbindungsfläche zwischen Innenseite des Gehäusebauteils 9 und der Endscheibe 4, wodurch die Dichtigkeit weiter verbessert wird.

## Patentansprüche

1. Flüssigkeitsfilter, insbesondere Kraftstoff- oder Ölfilter, mit einem in einem Gehäusebauteil (9) aufgenommenen, hohlzylindrischen Filterelement (1), das radial von dem zu reinigenden Fluid durchströmbar ist und Endscheiben (3, 4) aufweist, mit einem Wassersammelraum (11) im Boden des Gehäusebauteils (9), wobei die dem Boden zugewandte Endscheibe (4) des Filterelements (1) unmittelbar an der Innenseite des Gehäusebauteils (9) anliegt und den unter der Endscheibe (4) liegenden Wassersammelraum (11) strömungsdicht gegenüber der Rohseite des Filterelements (1) abschließt, wobei die radial außen liegende Kante der Endscheibe (4) strömungsdicht an dem Gehäusebauteil (9) anliegt, wobei die Endscheibe (4) des Filterelements (1) unlösbar mit dem Gehäusebauteil (9) verbunden ist, **dadurch gekennzeichnet, dass** das Gehäusebauteil (9) aus einem Kunststoffmaterial besteht und auch die Endscheibe (4) aus einem einen Schweißvorgang begünstigenden Kunststoffmaterial besteht, wobei die Endscheibe (4) des Filter-elements (1) mit dem Gehäusebauteil (9) verschweißt ist, wobei das Filterelement (1) und das Gehäusebauteil (9) eine zusammenhängende Baueinheit bilden, die insgesamt mit einem aufnehmenden Gehäuse verbindbar ist.

2. Flüssigkeitsfilter nach Anspruch 1, **dadurch gekennzeichnet, dass** die Endscheibe (4) des Filterelements (1) über eine Nut-Vorsprung-Verbindung mit dem Gehäusebauteil (9) verbunden ist.

3. Flüssigkeitsfilter nach Anspruch 2, **dadurch gekennzeichnet, dass** an der Endscheibe (4) eine umlaufende Verbindungsnut (14) und am Gehäusebauteil (9) ein umlaufender Verbindungsvorsprung (13) angeordnet sind, wobei der Verbindungsvorsprung (13) in die Verbindungsnut (14) einragt.

4. Flüssigkeitsfilter nach Anspruch 2 oder 3, **dadurch gekennzeichnet, dass** die Verbindungsnut (14) und der Verbindungsvorsprung (13) axial ausgerichtet sind.

5. Flüssigkeitsfilter nach einem der Ansprüche 1 bis 4, **dadurch gekennzeichnet, dass** die Außenseite des Gehäusebauteils (9) mit einem Außengewinde (10) zum Einschrauben in ein aufnehmendes Gehäuse versehen ist.

6. Flüssigkeitsfilter nach Anspruch 5, **dadurch gekennzeichnet, dass** an dem Gewinde ein Dichtring angeordnet ist.

7. Flüssigkeitsfilter nach einem der Ansprüche 1 bis 6, **dadurch gekennzeichnet, dass** auf der Reinseite des Filterelements (1) ein Coalescer-Element (7) angeordnet ist.

## Claims

1. Liquid filter, in particular fuel or oil filter, having a hollow-cylindrical filter element (1) accommodated in a housing component (9) and through which the fluid to be cleaned can flow radially and features end disks (3, 4), having a water-collecting chamber (11) in the bottom of the housing component (9), wherein the end disk (4) of the filter element (1) facing the bottom is in direct contact with the interior side of the housing component (9) and closes off the water collecting space (11) located under the end disk (4) in a flow-tight manner with respect to the raw side of the filter element (1), wherein the radially outer edge of the end disk (4) abuts in a flow-tight manner on the housing component (9), wherein the end disk (4) of the filter element (1) is undetachably connected to the housing component (9), **characterized in that** the housing component (9) consists of a plastic material and also the end disk (4) consists of a plastic material which favors a welding process, wherein the end disk (4) of the filter element (1) is welded to the housing component (9), wherein the filter element (1) and the housing component (9) form a continuous structural unit which can be connected as a whole to a receiving housing.

2. Liquid filter according to claim 1, **characterized in that** the end disk (4) of the filter element (1) is connected to the housing component (9) via a groove projection connection.

3. Liquid filter according to claim 2, **characterized in that** a circumferential connecting groove (14) is disposed on the end disk (4) and a circumferential connecting projection (13) is disposed on the housing component (9), wherein the connecting projection (13) projects into the connecting groove (14).

4. Liquid filter according to claim 2 or 3, **characterized in that** the connecting groove (14) and the connecting projection (13) are axially aligned.

5. Liquid filter according to one of the claims 1 to 4, **characterized in that** the exterior side of the housing component (9) is provided with an external thread (10) to be screwed into a receiving housing.

6. Liquid filter according to claim 5, **characterized in that** a sealing ring is disposed on the thread.

7. Liquid filter according to one of the claims 1 to 6, **characterized in that** a coalescer element (7) is arranged on the clean side of the filter element (1).

## Revendications

1. Filtre à liquide, notamment filtre à carburant ou à huile, comportant un élément filtrant en forme de cylindre creux (1) logé dans un composant de boîtier (9) et à travers duquel le fluide à nettoyer peut s'écouler radialement et qui présente des disques d'extrémité (3, 4), comportant un collecteur d'eau (11) au fond du composant de boîtier (9), le disque d'extrémité (4) de l'élément filtrant (1) tourné vers le fond étant en contact direct avec la face intérieure du composant de boîtier (9) et obturant le collecteur d'eau (11) situé sous le disque d'extrémité (4) de manière étanche au flux par rapport au côté brut de l'élément filtrant (1), le bord radialement extérieur du disque d'extrémité (4) reposant de manière étanche au flux contre le composant de boîtier (9), le disque d'extrémité (4) de l'élément filtrant (1) étant relié de manière inamovible au composant de boîtier (9), **caractérisé en ce que** le composant de boîtier (9) est en une matière plastique et le disque d'extrémité (4) est également en une matière plastique qui favorise un procédé de soudage, le disque d'extrémité (4) de l'élément filtrant (1) étant soudé au composant de boîtier (9), l'élément filtrant (1) et le composant de boîtier (9) formant une unité modulaire continue qui peut être reliée dans son ensemble à un boîtier récepteur.

2. Filtre à liquide selon la revendication 1, **caractérisé en ce que** le disque d'extrémité (4) de l'élément filtrant (1) est connecté via une connexion rainuresaillie avec le composant de boîtier (9).

3. Filtre à liquide selon la revendication 2, **caractérisé en ce qu'**une rainure de connexion circulaire (14) est disposée sur le disque d'extrémité (4) et une saillie de connexion circulaire (13) est disposée sur le composant de boîtier (9), la saillie de connexion (13) pénétrant dans la rainure de connexion (14).

4. Filtre à liquide selon la revendication 2 ou 3, **caractérisé en ce que** la rainure de connexion (14) et la saillie de connexion (13) sont alignées axialement.

5. Filtre à liquide selon l'une des revendications 1 à 4, **caractérisé en ce que** la face extérieure du composant de boîtier (9) est dotée d'un filet extérieur (10) pour permettre le vissage dans un boîtier de réception.

6. Filtre à liquide selon la revendication 5, **caractérisé en ce qu'**une bague d'étanchéité est disposée sur le filet.

7. Filtre à liquide selon l'une des revendications 1 à 6, **caractérisé en ce qu'**un élément coalesceur (7) est disposé du côté pur de l'élément filtrant (1).
